(19) Europäisches Patentamt
European Patent Office
Office européen des brevets

(11) Veröffentlichungsnummer: **0 327 984 A2**

(12) **EUROPÄISCHE PATENTANMELDUNG**

(21) Anmeldenummer: **89101864.0**

(51) Int. Cl.4: **C08G 65/40**

(22) Anmeldetag: **03.02.89**

(30) Priorität: **11.02.88 DE 3804159**

(43) Veröffentlichungstag der Anmeldung: **16.08.89 Patentblatt 89/33**

(84) Benannte Vertragsstaaten: **BE CH DE FR GB LI**

(71) Anmelder: **BASF Aktiengesellschaft**
**Carl-Bosch-Strasse 38**
**D-6700 Ludwigshafen(DE)**

(72) Erfinder: **Heinz, Gerhard, Dr.**
**Im Vogelsang 2**
**D-6719 Weisenheim(DE)**
Erfinder: **Lieder, Robert Ralf, Dr.**
**Albert-Einstein-Allee 10**
**D-6703 Limburgerhof(DE)**
Erfinder: **Koch, Juergen, Dr.**
**Woogstrasse 36**
**D-6708 Neuhofen(DE)**

(54) **Polyaryletherketone mit verbesserter Verarbeitbarkeit.**

(57) Polyaryletherketone, aufgebaut im wesentlichen aus

(A) 55 - 95 mol-% wiederkehrenden Einheiten der allgemeinen Formel I

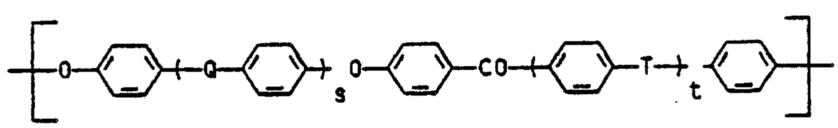

oder deren kernsubstituierten $C_1$-$C_6$-Alkyl-, $T_1$-, $T_6$-Alkoxy-, Aryl-, Chlor- oder Fluorderivaten, wobei s und t jeweils den Wert 0,1, 2 oder 3 haben und Q und T jeweils -O- oder -CO- sein können, und

(B) 5 - 45 mol-% wiederkehrenden Einheiten der allgemeinen Formel II

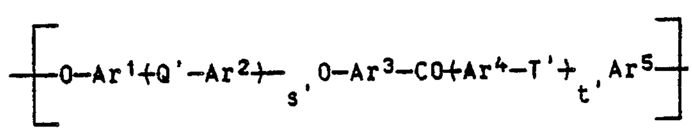 ,

wobei $Ar^1$, $Ar^2$, $Ar^3$, $Ar^4$ und $Ar^5$ unabhängig voneinander jeweils eine Phenylen-, Biphenylen- oder Naphthylengruppe oder ein $C_1$-$C_6$-Alkyl, $C_1$-$C_6$-Alkoxy-, Aryl-, Chlor- oder Fluorderivat derselben darstellen, $Q'$ und $T'$ jeweils -O- oder -CO- sein können und $s'$ und $t'$ jeweils den Wert 0,1, 2 oder 3 haben, mit der Maßgabe, daß mindestens einer der Substituenten $Ar^1$, $Ar^2$, $Ar^3$, $Ar^4$ oder $Ar^5$ eine Biphenylen- oder Naphthylengruppe oder ein $C_1$-$C_6$-Alkyl-, $C_1$-$C_6$-Akoxy-, Aryl-, Chlor- oder Fluorderivat einer solchen Gruppe ist und nicht alle Parameter s, t, $s'$ und $t'$ gleichzeitig den Wert 0 haben, wenn $Ar^1$ eine Biphenylen-Gruppe ist.

EP 0 327 984 A2

## Polyaryletherketone mit verbesserter Verarbeitbarkeit

Die vorliegende Erfindung betrifft Polyaryletherketone, aufgebaut im wesentlichen aus

(A) 55 - 95 mol-% wiederkehrenden Einheiten der allgemeinen Formel I

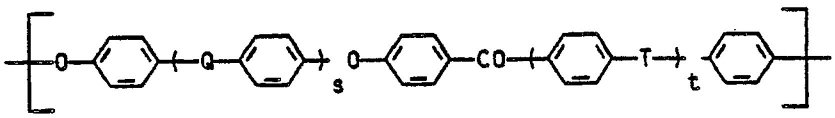

oder deren kernsubstituierten $C_1$-$C_6$-Alkyl-, $C_1$-, $C_6$-Alkoxy-, Aryl-, Chlor- oder Fluorderivaten, wobei s und t jeweils den Wert 0,1, 2 oder 3 haben und Q und T jeweils -O- oder -CO- sein können, und

(B) 5 - 45 mol-% wiederkehrenden Einheiten der allgemeinen Formel II

$$\left[ -O-Ar^1 \left( Q'-Ar^2 \right)_{s'} O-Ar^3-CO \left( Ar^4-T' \right)_{t'} Ar^5- \right] ,$$

wobei $Ar^1$, $Ar^2$, $Ar^3$, $Ar^4$ und $Ar^5$ unabhängig voneinander jeweils eine Phenylen-, Biphenylen- oder Naphthylengruppe oder ein $C_1$-$C_6$-Alkyl, $C_1$-$C_6$-Alkoxy-, Aryl-, Chlor- oder Fluorderivat derselben darstellen, $Q'$ und $T'$ jeweils -O- oder -CO- sein können und $s'$ und $t'$ jeweils den Wert 0,1, 2 oder 3 haben, mit der Maßgabe, daß mindestens einer der Gruppen $Ar^1$, $Ar^2$, $Ar^3$, $Ar^4$ oder $Ar^5$ eine Biphenylen- oder Naphthylengruppe oder ein $C_1$-$C_6$-Alkyl-, $C_1$-$C_6$-Akoxy-, Aryl-, Chlor- oder Fluorderivat einer solchen Gruppen ist und, falls $Ar^1$ eine Biphenylen-Gruppe ist, nicht alle Parameter s, t, $s'$ und $t'$ gleichzeitig den Wert 0 haben.

Außerdem betrifft die Erfindung die Verwendung derartiger Polyaryletherketone zur Herstellung von Formkörpern und Substraten für elektrische und elektronische Bauelemente, sowie die aus den Polyaryletherketonen erhältlichen Formkörper und Substrate für die erwähnten Bauelemente.

Polyaryletherketone zählen zur Klasse der sogenannten hochtemperaturbeständigen Thermoplaste, die in den letzten Jahren wegen ihrer interessanten Eigenschaften zunehmendes Interesse gefunden haben.

Viele Polyaryletherketone haben hohe Gebrauchstemperaturen und eine sehr gute Beständigkeit gegenüber agressiven Medien.

Ein Problem der Polyaryletherketone ist jedoch ihre Verarbeitbarkeit, denn, bedingt durch ihren hohen Schmelzpunkt sind für die thermoplastische Verarbeitung über die Schmelze sehr hohe Temperaturen erforderlich, welche zum einen technisch nur mit aufwendigen Mitteln zu realisieren und zum anderen den Nachteil haben, daß bei diesen Bedingungen die Polyaryletherketone selbst auch anfälliger gegenüber äußeren Einflüssen sind.

Es besteht daher Bedarf an Polyaryletherketonen, die einerseits bei hohen Gebrauchstemperaturen eingesetzt werden können, andererseits aber auf üblichen Verarbeitungsmaschinen über die Schmelze verarbeitet werden können.

Dies bedeutet, mit anderen Worten ausgedrückt, es sind Produkte erstrebenswert, die bei einer möglichst hohen Glasübergangstemperatur einen möglichst niedrigen Schmelzpunkt aufweisen.

Aus der EP-A 184 458 sind aromatische Polyetherketone bekannt, die aus wiederkehrenden Einheiten, die sich von Hydrochinon und 4,4′-Difluorbenzophenon bzw. 4,4′-Dihydroxydiphenyl und 4,4′-Difluorbenzophenon ableiten, aufgebaut sind. Der Anteil der erstgenannten Einheiten beträgt 60 bis 95 mol-%, der Anteil der zweiten Einheiten 5 bis 40 mol-%.

Ausweislich der Beispiele weisen die Produkte bei Schmelztemperaturen im Bereich von 310 bis 340 °C Glasübergangstemperaturen im Bereich von 143 bis 160 °C auf.

Für einige Anwendungszwecke wäre es jedoch wünschenswert, Produkte zur Verfügung zu haben, die bei noch akzeptablem Schmelzpunkt höhere Glasübergangstemperaturen aufweisen.

Aufgabe der vorliegenden Erfindung war es daher, Polyaryletherketone mit möglichst hoher Glasübergangstemperatur bei gleichzeitig möglichst niedrigem Schmelzpunkt zur Verfügung zu stellen.

Erfindungsgemäß wird diese Aufgabe durch die Polyaryletherketone gemäß Anspruch 1 gelöst.

Bevorzugte Ausführungsformen der Erfindung sind den Unteransprüchen zu entnehmen.

Die erfindungsgemäßen Polyaryletherketone sind zu 55 bis 95, vorzugsweise 65 bis 90 und besonders bevorzugt 65 bis 75 mol-% aufgebaut aus wiederkehrenden Einheiten der allgemeinen Formel I

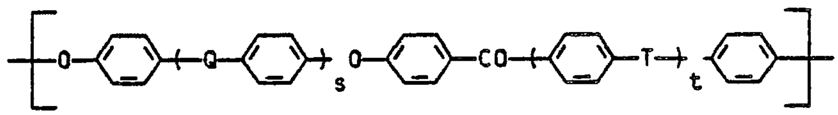

oder deren kernsubstituierten $C_1$-$C_6$-Alkyl-, $T_1$-, $T_6$-Alkoxy-, Aryl-, Chlor- oder Fluorderivaten, wobei s und t jeweils den Wert 0,1, 2 oder 3 haben und Q und T jeweils -O- oder -CO- sein können.

Bevorzugt werden Produkte mit wiederkehrenden Einheiten der allgemeinen Formel

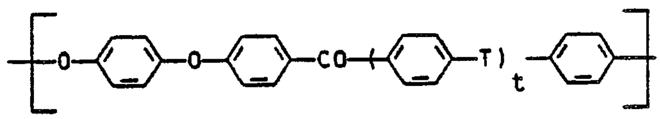 ,

wobei die aromatischen Ringe mit $C_1$-$C_6$-Alkylgruppen, $C_1$-$C_6$-Akoxygruppen, Arylgruppen, Chlor oder Fluor substituiert sein können und T und t, die in Anspruch 1 angegebene Bedeutung haben, als wiederkehrende Einheiten der allgemeinen Formel I.

Bevorzugt sind auch Produkte, in denen in der allgemeinen Formel I sowohl Q als auch T eine -CO-Gruppe darstellen.

S und t haben vorzugsweise jeweils den Wert 0 oder 1.

Stellvertretend für wiederkehrende Einheiten, die unter die allgemeine Formel I fallen, seien die nachstehenden genannt:

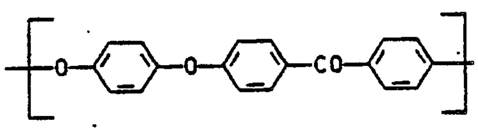 (I1)

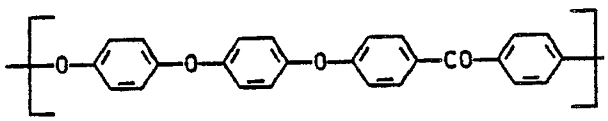 (I2)

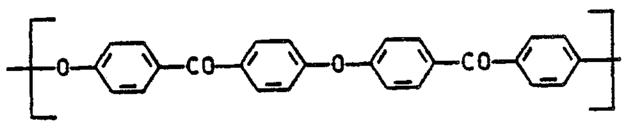 (I3)

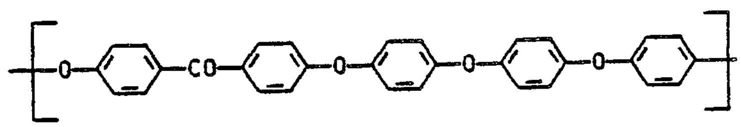 (I4)

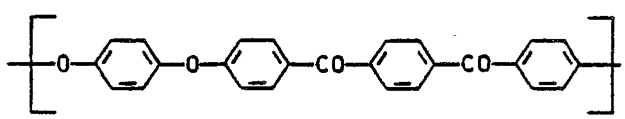 (I5)

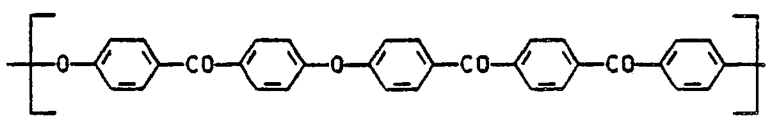 (I6)

Neben den wiederkehrenden Einheiten der allgemeinen Formel I enthalten die erfindungsgemäßen Polyaryletherketone 5 bis 45, vorzugsweise 10 bis 35 uns insbesondere 25 bis 35 mol-% an wiederkehrenden Einheiten der allgemeinen Formel II

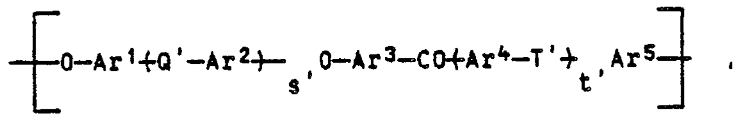

wobei $Ar^1$, $Ar^2$, $Ar^3$, $Ar^4$ und $Ar^5$ unabhängig voneinander jeweils eine Phenylen-, Biphenylen- oder Naphthylengruppe oder ein $C_1$-$C_6$-Alkyl, $C_1$-$C_6$-Alkoxy-, Aryl-, Chlor- oder Fluorderivat derselben darstellen, Q′ und T′ jeweils -O- oder -CO- sein können und s′ und t′ jeweils den Wert 0,1, 2 oder 3 haben.

Um Produkte mit niedrigem Schmelzpunkt bei gleichzeitig relativ hoher Glasübergangstemperatur zu erhalten, ist es wesentlich, daß mindestens einer der Substituenten $Ar^1$, $Ar^2$, $Ar^3$, $Ar^4$ oder $Ar^5$ eine Biphenylen- oder Naphthylengruppe ist.

Selbstverständlich können auch mehrere Biphenylen- oder Naphthylengruppen enthalten sein.

Durch die Einbeziehung dieser Gruppen in den in Anspruch 1 angegebenen Mengen erhält man Produkte, die im Vergleich zu Polyaryletherketonen ohne diese Einheiten niedrigere Schmelzpunkte bei praktisch unveränderter oder sogar leicht erhöhter Glasübergangstemperatur aufweisen. Gegenüber Polyaryletherketonen, die sich ausschließlich aus wiederkehrenden Einheiten mit Biphenylen- oder Naphthylengruppen ableiten, weisen die erfindungsgemäßen Produkte deutlich niedrigere Schmelzpunkte auf, ohne daß die Glasübergangstemperatur wesentlich abfällt.

Polyaryletherketone in denen in der allgemeinen Formel II beide Substituenten Q′ und T′ jeweils eine -CO-Gruppe darstellen, sowie solche, in denen die wiederkehrenden Einheiten der allgemeinen Formel II folgenden Aufbau haben

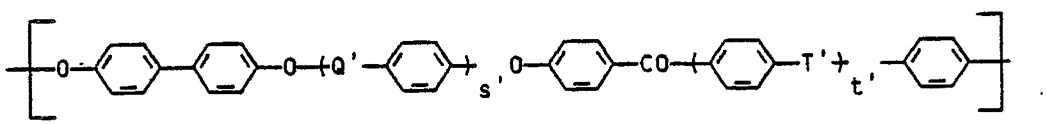

wobei die aromatischen Ringe durch $C_1$-$C_6$-Alkyl, $C_1$-$C_6$-Alkoxy-, Aryl-, Chlor- oder Fluorgruppen substituiert sein können und Q′, T′, s′ und t′, die in Anspruch 1 angegebene Bedeutung haben, werden bevorzugt.

Als Beispiele für wiederkehrende Einheiten der allgemeinen Formel II seien stellvertretend die nachstehenden genannt:

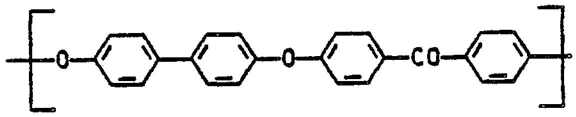

(II1)

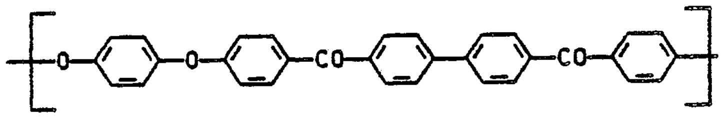

(II2)

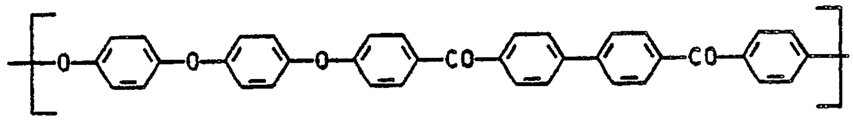

(II3)

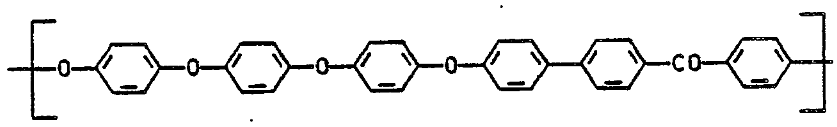

(II4)

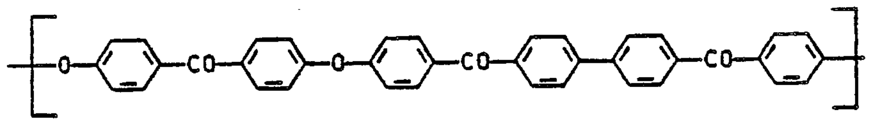

(II5)

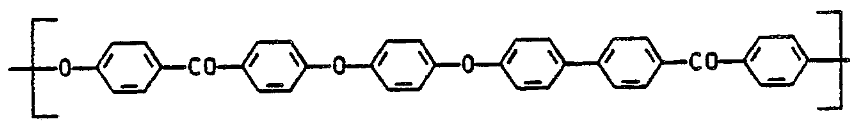

(II6)

Bei der Kombination von wiederkehrenden Einheiten der allgemeinen Formeln I und II ist auch darauf zu achten, daß nicht alle Parameter s, t, $s'$ und $t'$ gleichzeitig den Wert 0 haben, da die daraus resultierenden Produkte hinsichtlich der Glasübergangstemperatur nicht voll zufriedenstellen können (vgl. hierzu die einleitenden Ausführungen zur EP-A 184 458).

Zur Herstellung von wiederkehrenden Einheiten der allgemeinen Formeln I und II nach der nukleophilen Herstellungsweise durch Polykondensation von Dihydroxyverbindungen mit Dihalogenverbindungen können folgende Monomere eingesetzt werden:

| Formel | Bezeichnung |
|---|---|
| 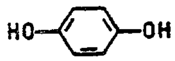 | Hydrochinon |
| 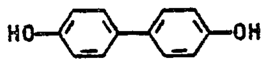 | 4,4'-Dihydroxydiphenyl |
| 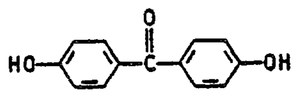 | 4,4'-Dihydroxybenzophenon |
| 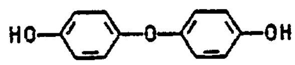 | 4,4'-Dihydroxydiphenylether |
| 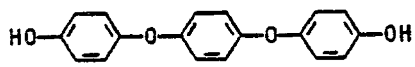 | |
| 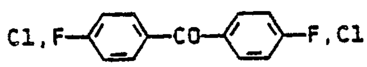 | 4,4'-Difluorbenzophenon |
| 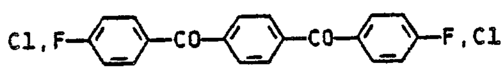 | 1,4-Bis(4-fluorbenzoyl)benzol |
| 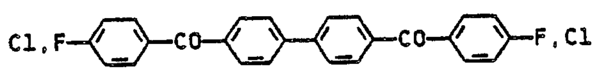 | 4,4'-Bis(p-fluorbenzoyl)biphenyl |
| 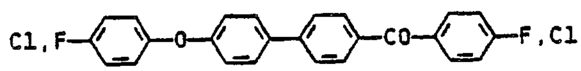 | 4-(p-Fluorphenoxy)-4'-(p-fluorbenzoyl)biphenyl |

Wie bereits erwähnt, können in den wiederkehrenden Einheiten der allgemeinen Formel II auch Naphthylengruppen anstelle der Biphenylengruppen enthalten sein. Nachstehend werden daher einige Monomere zur Einführung solcher Naphthylengruppen in die wiederkehrenden Einheiten der allgemeinen Formel II dargestellt.

| | |
|---|---|
| 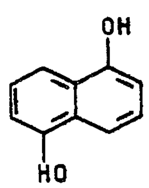 | 1,5-Dihydroxynaphthalin |
| 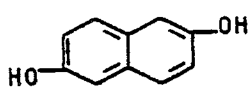 | 2,6-Dihydroxynaphthalin |
| 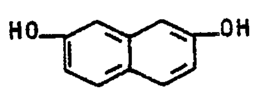 | 2,7-Dihydroxynaphthalin |

| Formel | Bezeichnung |
|---|---|
| 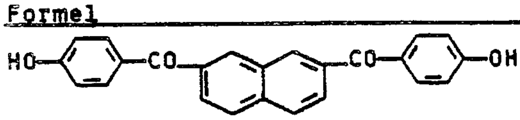 | 2,6- oder 2,7-Bis(p-hydroxybenzoyl)naphthalin |
| 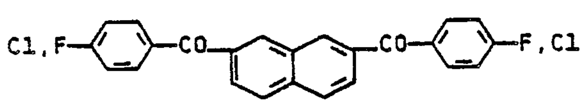 | 2,6- bzw 2,7-Bis(p-fluorbenzoyl)naphthalin |

Die vorstehend angegebenen Monomeren stellen nur eine Auswahl aus den bei der nukleophilen Herstellung verwendbaren Monomeren dar.

Gegebenenfalls können auch weitere Monomere, die -S-, $-SO_2-$ oder Imidbrückenglieder enthalten, in Mengen bis zu 10 Mol% mitverwendet werden.

Die wiederkehrenden Einheiten der allgemeinen Formeln I und II können in den erfindungsgmemäßen Polyaryletherketonen statistisch oder in Form von Blöcken eingebaut sein.

Einen statistischen Einbau erhält man einfach durch zeitlich gleichzeitige Zugabe aller Monomeren, während ein blockartiger Aufbau durch eine zeitlich getrennte Zugabe der Monomeren der einzelnen Blöcke erhalten wird.

Das Molekulargewicht (Gewichtsmittelwert) der erfindungsgemäßen Polyaryletherketone liegt im allgemeinen im Bereich von 10 000 bis 150 000, vorzugsweise von 15 000 bis 100 000 und insbesondere von 18 000 bis 80 000.

Falls die wiederkehrenden Einheiten der allgemeinen Formeln I und II in Form von Blöcken angeordnet sind, liegt das Molekulargewicht dieser einzelnen Blöcke im allgemeinen im Bereich von 500 bis 15 000, insbesondere von 1 500 bis 10 000 (auch hier sind jeweils Gewichtsmittelwerte gemeint).

Die erfindungsgemäßen Polyaryletherketone können auch mit anderen Polyaryletherketonen und/oder Polyarylethersulfonen und/oder flüssigkristalline Polymeren gemischt werden.

Darüber hinaus können auch Füllstoffe, Pigmente und übliche Verarbeitungshilfsmittel zugegeben werden.

Als verstärkend wirkende Füllstoffe seien beispielsweise Asbest, Kohlenstoffasern und vorzugsweise Glasfasern genannt, wobei die Glasfaser z.B. in Form von Glasgeweben, Glasmatten, Glasfließen und/oder vorzugsweise Glasseidenrovings oder geschnittener Glasseide aus alkaliarmen E-Glasen mit einem Durchmesser von 5 bis 20 µm, vorzugsweise 8 bis 15 µm zur Anwendung gelangen. Diese weisen nach ihrer Einarbeitung im allgemeinen eine mittlere Länge von 0,05 bis 1, vorzugsweise 0,1 bis 0,5 mm auf.

Die mit Glasseidenrovings oder geschnittener Glasseide verstärkten Polyaryletherketone enthalten im allgemeinen zwischen 10 und 60, vorzugsweise 20 bis 50 Gew.% des Verstärkungsmittels, bezogen auf das Gesamtgewicht, während die imprägnierten Glasgeweben, Glasmatten und/oder Glasfließe zwischen 10 und 80 Gew.%, vorzugsweise zwischen 30 und 60 Gew.% Polyaryletherketone, bezogen auf das Gesamtgewicht aus Füllstoff und Polyaryletherketon, enthalten.

Weitere geeignete Füllstoffe sind Wollastonit, Wollastocup, Calciumcarbonat, Glaskugeln, Quarzmehl und Bornitrit oder deren Mischungen, die in der Regel in Mengen von 10 bis 50 Gew.% zugesetzt werden.

Als Pigmente seien hier Titandioxid, Kadmiumsulfid, Zinksulfid, Bariumsulfat und Ruß als Stellvertreter genannt.

Zusatz und Hilfsstoffe sind beispielsweise Farbstoffe, Schmiermittel (Polytetrafluorethylen, Graphit oder Molybdändisulfid), Schleifmittel (z.B. Karborund) Lichtstabilisatoren und Hydrolyseschutzmittel, deren Anteil im allgemeinen im Bereich von 0,01 bis 10 Gew.%, bezogen auf das Gesamtgewicht der Polyaryletherketone, beträgt.

Wie bereits erwähnt, konnten die erfindungsgemäßen Polyaryletherketone sowohl auf nukelophilem als auch elektrophilem Wege hergestellt werden.

Für die Herstellung auf nukleophilem Wege kann im Prinzip das in der EP-A 1 879 beschriebene Verfahren angewandt werden, so daß sich hier nähere Angaben erübrigen.

Besonders geeignet ist die Umsetzung in aprotischen polaren Lösungsmitteln in Gegenwart von wasserfreien Alkalicarbonaten als Basen. Eine besonders bevorzugte Kombination in dieser Hinsicht ist Diphenylsulfon als Lösungsmittel und $K_2CO_3$ als Base.

Die Menge an Diphenylsulfon beträgt im allgemeinen 5 bis 100 mol, vorzugsweise 5 bis 20 mol, bezogen auf 1 mol Monomere. Dies ergibt einen bevorzugten Feststoffgehalt der Reaktionslösung im Bereich von 5 bis 50, besonders bevorzugt 10 bis 40 Gew.%.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen. Die Reaktionstemperatur liegt im allgemeinen im Bereich von 150 bis 400, vorzugsweise 250 bis 400 und insbesonders 250 bis 350 °C; die Gesamt-Reaktionsdauer richtet sich nach dem gewünschten Kondensationsgrad und liegt im allgemeinen im Bereich von 0,1 bis 15 h.

Im Anschluß an die Polykondensation können zur Stabilisierung freie Phenolat-Endgruppen mit einem Arylierungs- oder Alkylierungsmittel wie 4-Fluorbenzophenon oder Methylchlorid umgesetzt werden. Dies erfolgt vorzugsweise bei Temperaturen von bis zu 350 °C, wobei die untere Temperaturgrenze durch die

Löslichkeit des Polyaryletherketons im eingesetzten Lösungsmittel bestimmt wird.

Die Aufarbeitung der Reaktionsprodukte kann nach üblichen, an sich bekannten Verfahren erfolgen. Vorteilhaft wird aus der Schmelze ein feinteiliges Gut erzeugt, welches durch Extraktion mit einem geeigneten Lösungsmittel (z.B. Aceton) von Reaktionslösungsmittel (z.B. Diphenylsulfon) befreit wird. Anschließend können Reste von Alkalimetallcarbonaten und -fluoriden durch Extraktion mit Wasser entfernt werden.

Die Bedingungen für die Herstellung auf elektrophilem Weg nach der bekannten Friedel-Crafts Acylierung sind z.B. in der EP-A 124 276, der EP-A 138 990 oder US-A 3 956 240 beschrieben.

Bei der elektrophilen Herstellung werden in der Regel Monomere mit Carboxyl- oder Carboxylderivatgruppen mit Monomeren, die aktivierte Wassertoffatome enthalten, in Gegenwart von Katalysatoren in Lösungsmitteln umgesetzt.

Art und Menge von Katalysatoren und Lösungsmitteln sind in dem bereits genannten EP-A 124 276, EP-A 138 990 und US-A 3 956 240 beschrieben, so daß sich hier nähere Angaben erübrigen.

Die erfindungsgemäßen Polyaryletherketone zeichnen sich durch eine gute Wärmeformbeständigkeit bei gleichzeitig (infolge ihres relativ niedrigen Schmelzpunkts) guter Verarbeitbarkeit auf thermoplastischem Wege über die Schmelze aus.

Aufgrund dieses Eigenschaftspektrums können die erfindungsgemäßen Polyaryletherketone vorteilhaft zu Formkörpern und insbesondere Substraten für elektronische und elektrische Bauelemente verarbeitet werden.

Beispiel 1

28,95 g 1,4-Bis(p-fluorbenzoyl)benzol, 16,67 g 4,4′-Dihydroxybiphenyl, 13,7 g Kaliumcarbonat und 0,036 g 4-Fluorbenzophenon wurden in 600 g Diphenylsulfon unter Stickstoff nach folgendem Temperaturprogramm umgesetzt:

1 Stunde 180 °C
1 Stunde 200 °C
1 Stunde 240 °C
1 Stunde 320 °C
2 Stunden 330 °C.

Danach wurde die Schmelze auf ein Blech gegeben und nach Abkühlung zerkleinert. Das dabei erhaltene Produkt wurde anschließend 5 mal mit warmem Aceton und 5 mal mit heißem Wasser extrahiert und anschließend bei 200 °C getrocknet.

Beispiel 2

57,9 g 1,4-Bis(p-fluorbenzoyl)benzol, 20,04 g Hydrochinon, 27,4 g Kaliumcarbonat und 0,072 g 4-Fluorbenzophenon wurden in 600 g Diphenylsulfon unter Stickstoff nach folgendem Temperaturprogramm umgesetzt:

1 Stunde bei 180 °C
1 Stunde bei 240 °C
1 Stunde bei 280 °C
1 Stunde bei 300 °C
1 Stunde bei 320 °C.

Die Aufarbeitung erfolgte wie in Beispiel 1 beschrieben.

Beispiel 3

57,9 g 1,4-Bis(p-fluorbenzoyl)benzol, 10 g 4,4-Dihydroxybiphenyl, 13,8 g Hydrochinon, 27,4g Kaliumcarbonat und 0,072 g 4-Fluorbenzophenon wurden in 600 g Diphenylsufon nach dem in Beispiel 2 beschriebenen Temperaturprogramm umgesetzt.

Die Aufarbeitung des erhaltenen Produkts erfolgte wie in Beispiel 1 beschrieben.

Beispiele 4 bis 7

Nach der in Beispiel 3 beschriebenen Verfahrensweise wurden 1,4-Bis(p-fluorbenzoyl)benzol, 4,4-Dihydroxybiphenyl und Hydrochinon in den in der Tabelle angegebenen Molverhältnissen kondensiert. Dabei wurde die gleiche Menge an 1,4-Bis(p-fluorbenzoyl)benzol eingesetzt wie in Beispiel 3.

Die Aufarbeitung erfolgte wie in Beispiel 1 beschrieben.

In der nachfolgenden Tabelle sind die molaren Verhältnisse an Hydrochinon und Dihydroxybiphenyl, die in den einzelnen Beispielen eingesetzt wurden sowie die Glasübergangstemperatur, der Schmelzpunkt und die inhärente Viskosität der erhaltenen Produkte angegeben. Letztere wurde in 0,5 %iger Lösung in konzentrierter $H_2SO_4$ bestimmt.

Tabelle

| Beispiel Nr. | Molverhältnis | | Glasübergangstemperatur °C | Schmelztemperatur °C | IV (0,5 %ig in $H_2SO_4$ conc) |
|---|---|---|---|---|---|
| | Hydrochinon (mol%) | 4,4′-DHB (mol%) | | | |
| 1V | 0 | 100 | 183 | 424 | 0,61 |
| 2V | 100 | 0 | 165 | 365 | 0,88 |
| 3 | 70 | 30 | 170 | 330 | 0,95 |
| 4 | 95 | 5 | 168 | 359 | 0,89 |
| 5 | 90 | 10 | 168 | 355 | 0,86 |
| 6 | 85 | 15 | 166 | 350 | 0,81 |
| 7V | 30 | 70 | 170 | 421 | 0,63 |

V = Vergleichsbeispiel

Beispiel 8 (Electrophile Verfahrensvariante)

In einem 500 ml Dreihalskolben, der mit einem Rührer, einem Stickstoff-Einlaß und einem Innenthermometer versehen ist, werden 60 ml getrocknetes Dichlormethan vorgelegt.

Der Kolben wird mit Stickstoff gespült und während der gesamten Synthese unter Stickstoff gehalten. Der Inhalt des Kolbens wird auf -27° C gekühlt und wasserfreies Aluminiumchlorid (35.36 g, 265.2 mmol) wird über einen Pulvertrichter zugegeben. Zu der so erhaltenen Suspension wird N,N-Dimethylformamid (DMF, 11.08 g, 151.6 mol, frisch über Calciumhydrid destilliert) in Methlyenchlorid (30 ml) wegen der starken Wärmeentwicklung langsam zugegeben. Unter weiterem Kühlen wird eine Lösung von 4,4′-Diphenoxybenzol (10.856 g, 41.4 mmol), 4,4′-Diphenoxybiphenyl (3.424 g, 10.12. mmol), Terephthaloylchlorid (10.272 g, 50.6 mmol), und Benzoylchlorid (0.2134 g, 1.52 mmol) in Methylenchlorid (100 ml) zugegeben. Die zur Einwaage verwendeten Gefäße werden mit zusätzlichen 20 ml Methylenchlorid nachgespült, um eine vollständige Überführung der Monomeren sicherzustellen. Die gerührte Reaktionsmasse wird im Verlauf von ca. 6 Stunden auf Raumtemperatur erwärmt. Während dieser Zeit entsteht eine viskose rot-orange Suspension, die sich zu einem porösen Schaum verfestigt. Die gelartige Masse wird mechanisch aus dem Kolben entfernt, durch Zerschneiden mit einem Messer vorzerkleinert und in einem Haushalts-Mixer zusammen mit Eiswasser zerkleinert und dekomplexiert. Die entstehende Suspension von weißen Polymerteilchen in Wasser wird ca. 30 Minuten im Mixer gerührt und dann filtriert. Das so gewonnene Polymer wird dreifach mit kochendem Wasser extrahiert (je 1000 ml, 6 Stunden).

Nach Trocknung im Vakuum (100° C, 18 Stunden) wird ein Polymer mit einer inhärenten Viskosität von 1.02 (gemessen in konz. Schwefelsäure bei 25° C, 0.5 g/100 ml) erhalten. Das so erhaltene Copolymer weist eine Glasübergangstemperatur von 163° C und eine Schmelztemperatur von 344° C auf.

**Ansprüche**

1. Polyaryletherketone, aufgebaut im wesentlichen aus

(A) 55 - 95 mol-% wiederkehrenden Einheiten der allgemeinen Formel I

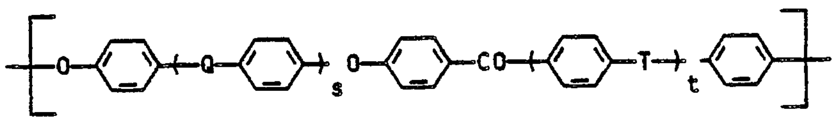

oder deren kernsubstituierten $C_1$-$C_6$-Alkyl-, $C_1$-, $C_6$-Alkoxy-, Aryl-, Chlor- oder Fluorderivaten, wobei s und t jeweils den Wert 0,1, 2 oder 3 haben und Q und T jeweils -O- oder -CO- sein können, und
(B) 5 - 45 mol-% wiederkehrenden Einheiten der allgemeinen Formel II

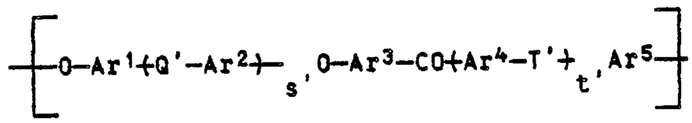 ,

wobei $Ar^1$, $Ar^2$, $Ar^3$, $Ar^4$ und $Ar^5$ unabhängig voneinander jeweils eine Phenylen-, Biphenylen- oder Naphthylengruppe oder ein $C_1$-$C_6$-Alkyl, $C_1$-$C_6$-Alkoxy-, Aryl-, Chlor- oder Fluorderivat derselben darstellen, $Q'$ und $T'$ jeweils -O- oder -CO- sein können und $s'$ und $t'$ jeweils den Wert 0,1, 2 oder 3 haben,
mit der Maßgabe, daß mindestens einer der Gruppen $Ar^1$, $Ar^2$, $Ar^3$, $Ar^4$ oder $Ar^5$ eine Biphenylen- oder Naphthylengruppe oder ein $C_1$-$C_6$-Alkyl-, $C_1$-$C_6$-Akoxy-, Aryl-, Chlor- oder Fluorderivat einer solchen Gruppe ist und, wenn $A^1$ eine Biphenylen-Gruppe ist, nicht alle Parameter s, t, $s'$ und $t'$ gleichzeitig den Wert 0 haben.

2. Polyaryletherketone nach Anspruch 1, aufgebaut im wesentlichen aus
(A) 65 - 90 mol-% wiederkehrenden Einheiten der allgemeinen Formel I und
(B) 10 - 35 mol-% wiederkehrenden Einheiten der allgemeinen Formel II.

3. Polyaryletherketone nach mindestens einem der Ansprüche 1 und 2, dadurch gekennzeichnet, daß in der allgemeinen Formel I Q und und T jeweils -CO- sind.

4. Polyaryletherketone nach mindestens einem der Ansprüche 1 bis 3, dadurch gekennzeichnet, daß in der allgemeinen Formel II $Q'$ und $T'$ jeweils -CO- sind.

5. Polyaryletherketone nach mindestens einem der Ansprüche 1 bis 4, dadurch gekennzeichnet, daß sie im wesentlichen aufgebaut sind aus
(A) 55 - 95 mol-% wiederkehrenden Einheiten der allgemeinen Formel

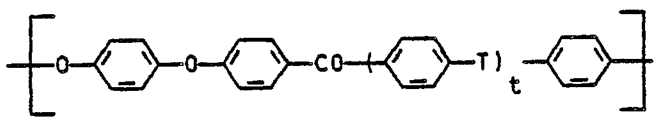 ,

wobei die aromatischen Ringe mit $C_1$-$C_6$-Alkylgruppen, $C_1$-$C_6$-Alkoxygruppen, Arylgruppen, Chlor oder Fluor substituiert sein können und T und t die in Anspruch 1 angegebene Bedeutung haben, und
(B) 5 - 45 mol-% wiederkehrenden Einheiten der allgemeinen Formel

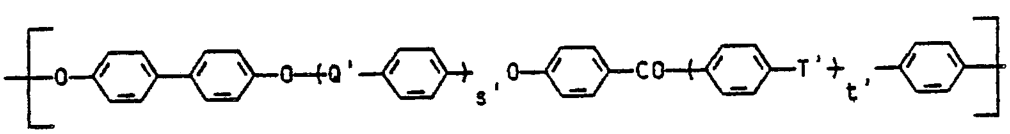

wobei die aromatischen Ringe durch $C_1$-$C_6$-Alkyl, $C_1$-$C_6$-Alkoxy-, Aryl-, Chlor- oder Fluorgruppen substituiert sein können und $Q'$, $T'$, $s'$ und $t'$, die in Anspruch 1 angegebene Bedeutung haben.

6. Mischungen, enthaltend 10 bis 90 Gew.% eines Polyaryletherketons nach mindestens einem der Ansprüche 1 bis 5 und 10 - 90 Gew.% eines davon verschiedenen Polyaryletherketons.

7. Mischungen, enthaltend 10 bis 90 Gew.% eines Polyaryletherketons nach mindestens einem der Ansprüche 1 bis 5 und 10 - 90 Gew.% eines Polyarylethersulfons.

8. Mischungen, enthaltend 10 bis 90 Gew.% eines Polyaryletherketons nach mindestens einem der Ansprüche 1 bis 5 und 10 - 90 Gew.% eines flüssigkristallinen Polymeren.